# EUROPEAN PATENT APPLICATION

(11) **EP 4 826 421 A1**
(43) Date of publication of application: **21.10.2026**
(21) Application number: 26171048.7
(22) Date of filing: 07.04.2026
(51) Int. Cl.: G02B 6/122, G02B 6/30

(54) **PHOTONIC CHIP WITH A LATERAL OUTER SURFACE FOR OPTICAL COUPLING**

(30) Priority: 15.04.2025 FR 2503996
(71) Applicant: Commissariat à l'Energie Atomique et aux Energies Alternatives, 75015 Paris (FR); Argotech, 54701 Nachod (CZ); Centre National de la Recherche Scientifique, 75016 Paris (FR); Université Savoie Mont Blanc, 73000 Chambéry (FR); Université Grenoble Alpes, 38400 Saint-Martin-d'Hères (FR); Institut Polytechnique de Grenoble, 38000 Grenoble (FR)
(72) Inventor: CHARBONNIER, Benoît, 38054 GRENOBLE CEDEX 09 (FR); PAVANELLO, Fabio, 38000 GRENOBLE (FR); KAVAN, Frantisek, 54101 TRUTNOV (CZ); ZOLDAK, Martin, 54101 TRUTNOV (CZ); SZAJ, Michal, 54102 TRUTNOV (CZ)
(74) Representative: Cabinet Beaumont

(57) **Abstract**

The present description relates to a photonic chip (100) comprising at least one waveguide (102) disposed on a support (104), the waveguide comprising at least one interface element (112) extending between a first end (114) and a second end (116) forming an optical coupling outer surface (118) belonging to a same plane as a side face (120) of the photonic chip or to a plane parallel to the side face, and wherein the second end comprises:
- a thickness, perpendicular to an upper face (122) of the support on which the waveguide is disposed, which is less than a thickness of the first end, and/or
- a width, parallel to the optical coupling outer surface and perpendicular to the thickness of the second end, which is greater than a width of the first end.

## Description

### Technical field

The present disclosure generally relates to the field of integrated photonics, in particular of the design and of the manufacturing of photonic chips or photonic integrated circuits (PICs) and of photonic devices comprising photonic chips optically coupled to each other.

### Background art

In the field of integrated photonics, the manufactured photonic devices can be large and complex. However, the size of the photonic chips used for manufacturing these devices is limited by technological constraints such as the maximum size of the used lithography masks. These constraints imply that the manufacturing of large photonic devices involves the producing of separate photonic chips that must then be assembled and optically coupled to each other within a single large photonic device. In addition, the optical coupling of photonic chips to each other may imply that a large number of optical inputs/outputs of each chip are coupled in parallel. Furthermore, some electrical contacts present on the photonic chips may need to remain accessible from outside the chips.

A first example of optical coupling between two photonic chips consists of first disposing the chips on a common support. The assembly is then covered with a thick layer of photosensitive resin. A laser is then focused on different regions of the photosensitive resin to polymerize it and create optical connections, in the form of photonic waveguides, between the chips.

This first example of coupling has the advantage of allowing chips to be positioned with a low precision on the common support since the technique implemented to form the optical connections offers a good tolerance to any misalignments between the chips, for example due to differences in thicknesses of the chips or to differences in pitches or positions between the inputs/outputs of the chips. Meanwhile, the time required to create the optical connections is very long because only one optical connection can be created at a time, due to the unitary nature of the process implemented to create it. Furthermore, the created polymer optical connections generate significant insertion losses. The optical power density that can be achieved with such optical connections is also limited. In addition, the created optical connections may suffer from stability problems due, for example, to the aging of the polymer and to differences between thermal expansion coefficients, which can be critical, particularly in specific applications where the photonic chips are subject to significant temperature fluctuations.

The document by Wilmart Q. et al., "Advanced Si photonics platform for high-speed and energy-efficient optical transceivers for datacom", Proceedings Volume 11285, Silicon Photonics XV; 112850B (2020), San Francisco, California, United States, describes a second example of optical coupling between a photonic chip and an optical fiber. It describes the production of a waveguide using SiN-on-insulator technology. A facet is etched into a silicon oxide encapsulation layer near one end of the waveguide to allow light transmitted in the waveguide to exit the chip through this facet. The waveguide must be tapered in order to widen the transmitted optical mode and make it compatible with the input of the optical fiber. The end of the optical fiber is then placed close to the etched facet so that the fiber is parallel to the waveguide. A lens may be disposed at the end of the optical fiber to increase the efficiency of the optical coupling between the optical fiber and the waveguide.

This second example of optical coupling allows to achieve very low coupling, for example less than 0.1 dB, over a wide range of wavelengths, for example greater than 100 nm. Nevertheless, it requires extremely precise alignment of the optical fiber with the waveguide of the photonic chip (precision less than 0.2 µm). An active alignment, using, for example, a laser coupled to the optical fiber and means for measuring the optical power transmitted to the waveguide, is therefore necessary, which makes this type of coupling difficult to adapt to an industrial production.

A third example of coupling consists in creating, between two photonic chips, an optical connection by polymer reflow. Although this type of coupling ensures an optical transmission with a low light loss, even in the presence of a significant misalignment between the chips (e.g. of the order of 1 to 2 µm), it requires the creation of additional elements on the upper surface of the chips to enable the extraction, magnification and orientation, in a direction parallel to the upper surface of the chips, of an optical mode traveling in a waveguide integrated into the chip, which greatly complicates the manufacturing of the photonic device and increases its cost.

A fourth example of coupling between photonic chips consists in producing diffraction grating couplers that enable an optical mode transfer with relatively low losses (between 1 and 3 dB) between a waveguide and an optical fiber. The diffraction grating coupler extracts the mode from a horizontal waveguide, expands the mode diameter so that it matches the one of the fiber and deflects the light propagation toward the top of the chip, allowing a properly positioned fiber to collect the optical power. Such couplers can be used to optically couple two chips to each other. To do this, the two chips are mechanically coupled to each other by flipping them over ("flip-chip") so that two diffraction grating couplers (one on each chip) face each other. Light can then be transferred from one chip to the other. The soldering by reflowing microbeads, as used to make the chips integral with each other, allows for an automatic alignment of the two chips and thereby a very precise positioning of the chips relative to each other is achieved. This makes this assembly tolerant to any misalignments and suitable for an automatic coupling of a large number of optical inputs and outputs.

The main disadvantage of this fourth coupling example is that a large surface area, on each chip, must be devoted to the arrangement of the solder microbeads. In addition, the electrical contacts on the upper chip are located at the interface between the two chips, which requires them to be rerouted to a free external surface and again results in a loss of chip surface area. In addition, the bandwidth of such couplers is reduced, and is further reduced by successive couplings between them. The obtained insertion losses are also significant, for example of the order of 2 to 6 dB.

### Summary of Invention

There is a need to provide a photonic chip provided with an optical coupling element that does not have at least some of the disadvantages of the known solutions.

One embodiment overcomes all or some of the disadvantages of the known solutions and provides a photonic chip comprising at least one waveguide disposed on a support, the waveguide comprising at least one interface element extending between a first end and a second end forming an optical coupling outer surface belonging to a same plane as a side face of the photonic chip or to a plane parallel to the side face, and wherein the second end comprises:
- a thickness, perpendicular to an upper face of the support on which the waveguide is disposed, which is less than a thickness of the first end, and/or
- a width, parallel to the optical coupling outer surface and perpendicular to the thickness of the second end, which is greater than a width of the first end.

According to a particular embodiment, at least a portion of the interface element is arranged on a portion of the support disposed in overhang of an empty space.

According to a particular embodiment, the portion of the support disposed in overhang of the empty space has a thickness less than that of the rest of the support, for example between 10 µm and 300 µm.

According to a particular embodiment, the support comprises a bulk layer and a buried dielectric layer of a semiconductor-on-insulator type substrate, and the waveguide comprises portions of material derived from a surface layer of the substrate.

According to a particular embodiment:
- the width of the first end is between 350 nm and 500 nm and the width of the second end is between 2 µm and 10 µm, and
- the thickness of the first end is between 100 nm and 500 nm and the thickness of the second end is between 40 nm and 100 nm.

According to a particular embodiment, when the second end and the side face belong to different planes, a distance between these planes is less than or equal to 5 µm.

According to a particular embodiment, the side face is provided with at least one alignment element, for example a protruding element, configured to be aligned with at least one complementary alignment element, for example a recess, disposed on a side face of another photonic chip to be optically coupled with said photonic chip by the optical coupling outer surface.

Is also provided a photonic device comprising at least two photonic chips aligned with each other such that the optical coupling outer surfaces of the photonic chips are disposed at least partially opposite each other.

According to a particular embodiment, the photonic device further comprises intermediate substrates such that the support of each of the photonic chips is integral with one of the intermediate substrates, and the photonic chips are made integral with each other by at least one fastening element, comprising for example an adhesive, disposed between the photonic chips and/or between the intermediate substrates.

According to a particular embodiment, the photonic device further comprises an assembly support with which the intermediate substrates are integral.

According to a particular embodiment, thicknesses of the photonic chips differ from one another, and this difference in thicknesses is compensated for by at least one of the following features:
- the intermediate substrates have different thicknesses;
- the chips are made integral with the intermediate substrates by fastening layers of different thicknesses;
- the assembly support comprises regions of different thicknesses with which the intermediate substrates are made integral;
- the intermediate substrates are made integral with the assembly support by other fastening layers of different thicknesses.

Is also provided a method for producing a photonic chip comprising at least a production of a waveguide disposed on a support, the waveguide comprising at least one interface element extending between a first end and a second end forming an optical coupling outer surface belonging to a same plane as a side face of the photonic chip or to a plane parallel to the side face, wherein the second end comprises:
- a thickness, perpendicular to an upper face of the support on which the waveguide is disposed, which is less than a thickness of the first end, and/or
- a width, parallel to the optical coupling outer surface and perpendicular to the thickness of the second end, which is greater than a width of the first end.

According to a particular embodiment, the production of the waveguide comprises the implementation of an etching, from an upper face of at least a portion of material to form the waveguide and through a portion of the thickness of the support, forming the optical coupling outer surface.

According to a particular embodiment, the producing process further comprises, when a portion of the interface element is arranged on a portion of the support disposed in overhang of an empty space, the implementation of an etching from a rear face of the support cutting out the chip and forming the empty space.

Is also provided a method for manufacturing a photonic device, comprising at least:
- the production of at least two photonic chips, comprising the implementation of a method for producing the photonic chip;
- the securing of each of the photonic chips on an intermediate substrate;
- the alignment of the photonic chips with each other such that the optical coupling outer surfaces of the photonic chips are disposed at least partially opposite each other;
- the securing of the intermediate substrates on an assembly support.

### Brief description of drawings

The foregoing features and advantages, as well as others, will be detailed in the following description of particular embodiments made on a non-limiting basis, in connection with the appended Figures, among which:
- Figure 1 illustrates an example of photonic chips optically coupled to each other according to a particular embodiment;
- Figure 2 illustrates different views of an example of an interface element of a waveguide of a photonic chip according to a particular embodiment;
- Figure 3 illustrates the optical transmission performance achieved with a photonic chip according to a particular embodiment;
- Figures 4 and 5 illustrate different configurations obtained during the implementation of a method for manufacturing a photonic device according to a particular embodiment;
- Figure 6 illustrates a top view of an example embodiment of photonic chips according to a particular embodiment;
- Figure 7 illustrates optical transmission values with a photonic chip according to a particular embodiment, as a function of a vertical misalignment of the waveguide of the chip and for different gap values relative to the photonic chip; and
- Figure 8 illustrates different configurations of a photonic device according to a particular embodiment.

### Description of embodiments

The same elements have been designated by the same references in the various Figures. In particular, the structural and/or functional elements that are common among the various embodiments may have the same references and may have identical structural, dimensional and material properties. In the Figures, for ease of reading, the different elements and layers of materials are not illustrated to the same scale relative to each other.

For the sake of clarity, only the steps and elements useful for understanding the described embodiments have been illustrated and are detailed. In particular, various elements (waveguides, other components of the photonic chips, etc.) and various steps implemented for the production of these elements are not detailed. Those skilled in the art will be able to produce these elements in detail based on the here provided functional description.

In the following disclosure, unless otherwise specified, when reference is made to absolute positional qualifiers, such as the terms "front", "back", "top", "bottom", "left", "right", etc., or to relative positional qualifiers, such as the terms "above", "below", "higher", "lower", "lateral/side", etc., or to qualifiers of orientation, such as "horizontal", "vertical", etc., reference is made to the orientation illustrated in the Figures. However, these terms do not presume the actual position and orientation of the device during its use.

Unless otherwise specified, the expressions "about", "approximately", "substantially" and "of the order of" signify within 10 %, and preferably within 5 %.

Unless otherwise indicated, the indicated ranges of values include the limits of those ranges.

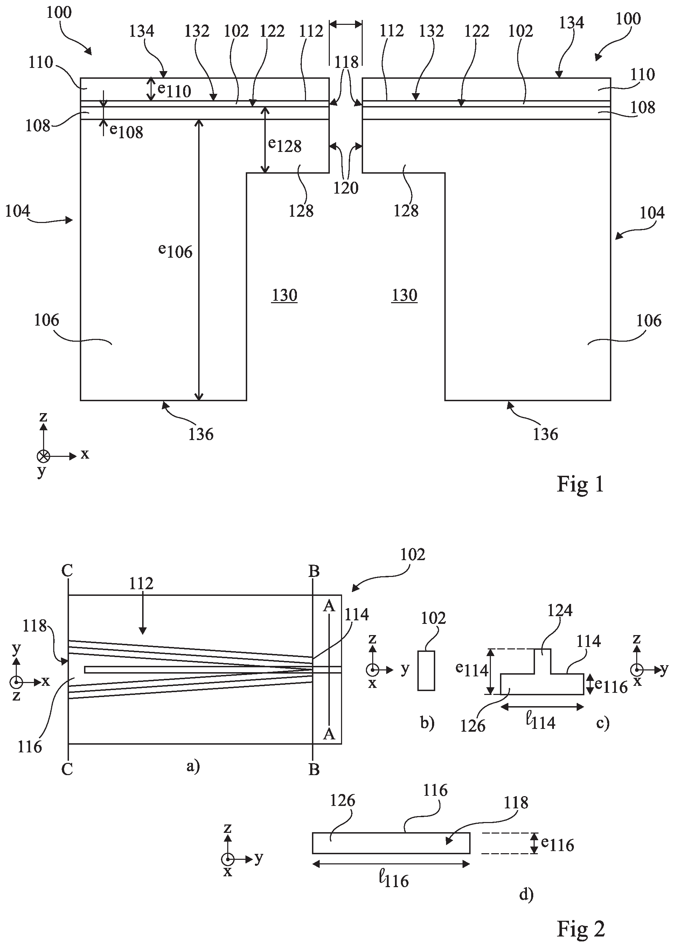

An example embodiment of photonic chips 100 configured to be optically coupled to each other is described below in connection with Figure 1.

Each of the photonic chips 100 comprises at least one waveguide 102 disposed on a support 104. In the described example embodiment, the support 104 comprises a bulk layer 106 and a buried dielectric layer 108 derived from a substrate of the semiconductor-on-insulator type, for example SOI (Silicon On Insulator). In this example, the waveguide 102 is made from the surface layer of the substrate and comprises portions of material derived from this surface layer. In this example, the bulk layer 106 comprises, for example, silicon and its thickness *e₁₀₆* is, for example, of the order of several hundred microns, for example equal to 775 µm. In this example, the buried dielectric layer 108, also called BOX ("Buried-Oxide") when the substrate is of the SOI type, comprises SiO₂, and its thickness *e₁₀₈* is, for example, of the order of several hundred nanometers, for example equal to 720 nm, or even greater (for example equal to 2 µm). In this example, the semiconductor surface layer from which the waveguide 102 is made comprises silicon or InP. As a variant, other materials may be used to make the waveguide 102, such as for example SiN, lithium niobate, etc. The initial thickness of the surface layer used to make the waveguide 102 is, for example, between 100 nm and 1 µm.

As a variant, other types of the support 104 may be used to produce the photonic chips 100.

In the described example embodiment, the waveguide 102 of each chip 100 is covered with an encapsulation layer 110. The encapsulation layer 110 comprises, for example, a material identical to that of the buried dielectric layer 108, in the present case SiO₂. The thickness *e₁₁₀* of the encapsulation layer 110 may be equal to several microns, for example 3 µm.

In general, the materials between which the waveguide 102 is located and their thicknesses may be such that the light beams transmitted in the waveguide 102 are guided between these materials and do not escape from the material of the waveguide 102.

The waveguide 102 of each chip 100 comprises an interface element 112 to be optically coupled with an interface element 112 of a waveguide 102 of another chip 100. Figure 2 illustrates several detailed views of an example of such an interface element 112 and of the waveguide 102. The view a) of Figure 2 corresponds to a top view of the interface element 112 and of a portion of the waveguide 102, the view b) of Figure 2 corresponds to a cross-sectional view of the waveguide 102 along the axis AA illustrated in the view a), the view c) of Figure 2 corresponds to a cross-sectional view of the interface element 112 along the axis BB illustrated in the view a) and the view d) of Figure 2 corresponds to a cross-sectional view of the interface element 112 along the axis CC illustrated in the view a).

The interface element 112 extends between a first end 114 and a second end 116 forming an optical coupling outer surface 118 belonging to a same plane as a side face 120 of the chip 100, or to a plane parallel to this side face 120 and recessed by a distance of, for example, between 0 and 5 µm. In the example illustrated in Figure 2, the first end 114 is illustrated in the view c) and the second end 116 is illustrated from the front in the view d). The optical coupling outer surface 118 forms an edge coupler of the chip 100, to be coupled to an edge coupler of another chip 100.

In general, the second end 116 has a thickness *e₁₁₆,* which corresponds to the dimension of the second end 116 perpendicular to an upper face 122 of the support 104 on which the waveguide 102 is disposed (dimension parallel to the Z axis in the various Figures), which is less than a thickness *e₁₁₄* of the first end 114 (which corresponds to the dimension of the first end 114 perpendicular to the upper face 122), and/or the second end 116 has a width *l₁₁₆* (dimension parallel to the Y axis in the various Figures), which corresponds to the dimension of the second end 116 that is parallel to the optical coupling outer surface 118 and perpendicular to the thickness of the second end 116, which is greater than a width *l₁₁₄* of the first end 114 (which corresponds to the dimension of the first end 114 that is parallel to the optical coupling outer surface 118 and perpendicular to the thickness of the first end 114).

In the described example embodiment, the width *l₁₁₄* of the first end 114 of the interface element 112 is between 350 nm and 500 nm and the width *l₁₁₆* of the second end 116 of the interface element 112 is between 2 µm and 10 µm. For example, the width *l₁₁₄* of the first end 114 is equal to 400 nm and the width *l₁₁₆* of the second end 116 is equal to 5 µm.

Furthermore, in the described example embodiment, the thickness *e₁₁₄* of the first end 114 of the interface element 112 is between 100 nm and 500 nm and the thickness *e₁₁₆* of the second end 116 of the interface element 112 is between 40 nm and 100 nm. For example, the thickness *e₁₁₄* of the first end 114 is equal to 300 nm and the thickness *e₁₁₆* of the second end 116 is equal to 65 nm.

In general, the interface element 112 may be such that it comprises a thinning from the first end 114 to the second end 116 and/or a narrowing in width from the second end 116 to the first end 114.

In the described example embodiment, this change in dimensions of the interface element 112 between the first end 114 and the second end 116 is achieved by reducing, from the first end 114 to the second end 116, the thickness of an upper portion 124 of the interface element 112 having a width identical to that of the portions of the waveguide 102 other than the interface element 112 and by increasing, from the first end 114 to the second end 116, the width of a lower portion 126 of the interface element 112, this lower portion 126 having, along the entire length of the interface element 112, a thickness equal to the thickness *e₁₁₆* of the second end 116. Thus, in this example, between the two ends 114, 116, the interface element 112 has a shape corresponding to an inverted "T", as illustrated in the view c) of Figure 2. In the described example embodiment, at the second end 116, the interface element 112 comprises only the lower portion 126 and thus, has a rectangular shape. The changes in width and in thickness between the first and second ends 114, 116 may be gradual or not, linear or not, stepped, etc.

In the described example embodiment, the interface element 112 also has a length (dimension parallel to the X axis in the various Figures and perpendicular to the widths and thicknesses of the ends 114, 116) of between 20 µm and 50 µm and, for example, equal to 30 µm.

Besides the interface element 112, the waveguide 102 extends into the chip 100, on the upper face 122 of the support 104. The dimensions, in planes perpendicular to the upper face 122 of the support 104, of these other portions of the waveguide 102 are, for example, 300 nm in height and 500 nm in width.

In the described example embodiment, the dimensions of the second end 116 and thus, of the optical coupling outer surface 118 are selected as a function of the optical mode to be transmitted and received by the waveguide 102. In particular, the width *l₁₁₆* can be selected to allow the interface element 112, which forms a mode matching region, to ensure that the output mode is sufficiently large and to allow alignment tolerances between the chips 100 to be optically coupled to each other by their optical coupling outer surface 118.

The transmitted mode may correspond to the TE mode or to the TM mode. When the thickness of the waveguide 102 is small, the mode transmitted by the waveguide 102 may preferably be the TE mode. When the thickness of the waveguide 102 is greater, the mode transmitted by the waveguide 102 may preferably be the TM mode.

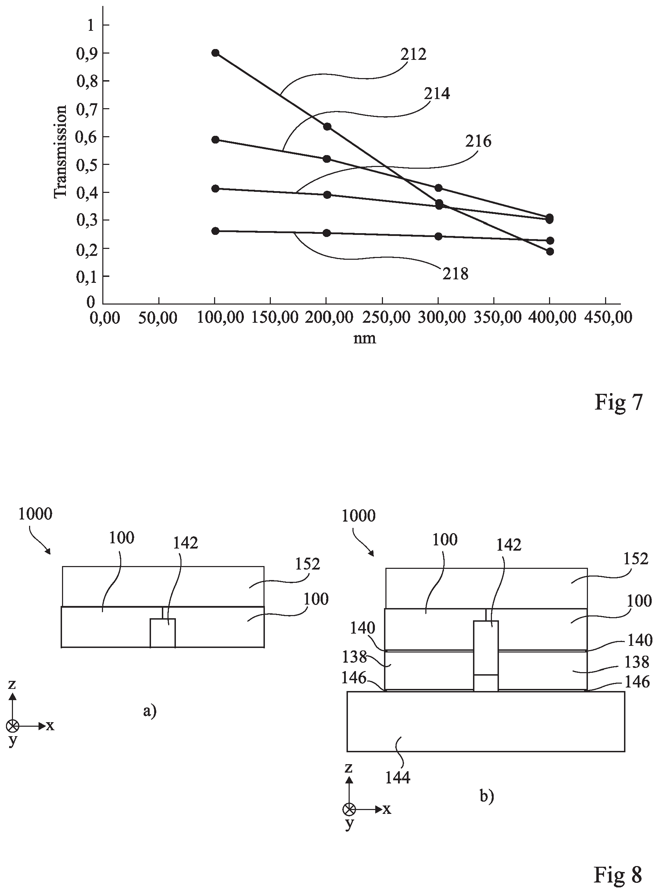

In the described example embodiment, the coupling is to be made between chips forming identical couplers that exchange identical modes, allowing a lossless transmission, regardless of the mode size, when the couplers are aligned and close to each other. However, the dimensions of the couplers can be determined as a function of the misalignment that can be tolerated between the two chips. Figure 7 illustrates different curves of the optical transmission rate obtained as a function of the vertical misalignment, in nm, and for different values of gap, or of space, between the chips: the curve 212 corresponds to a zero gap, the curve 214 corresponds to a gap of 0.5 µm, the curve 216 corresponds to a gap of 1 µm and the curve 218 corresponds to a gap of 2 µm. These curves are obtained for a 20 µm long coupler, with an end 65 nm thick and 5 µm wide, transmitting a mode with a MFD (modal field diameter) of 0.4 µm vertically and of 4 µm horizontally. These curves show that for a gap of less than 0.5 µm, the structure tolerates a vertical misalignment corresponding to a quarter of the diameter of the transmitted mode.

The envisaged transmission configuration, from one chip to another without passing through a fiber, allows the use of interface elements 112 forming transition zones that are more compact than for transmissions passing through a fiber, which is favorable for the creation of a large number of optical interconnections between two chips.

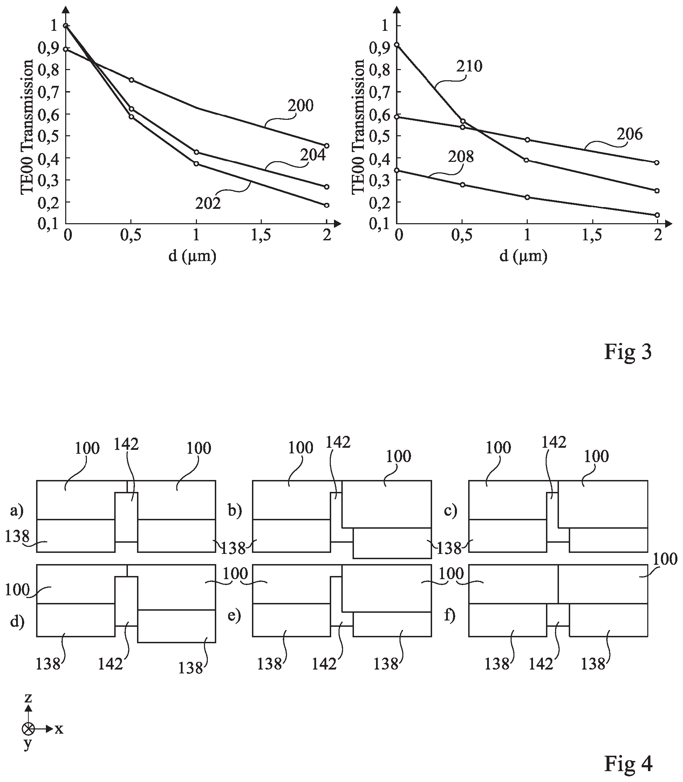

Figure 3 illustrates the transmission performance achieved between two chips 100, each comprising a waveguide 102 made of silicon, as a function of a distance d separating the optical coupling outer surfaces 118 of the chips 100. The curves 200, 202 and 204 illustrate the fundamental mode transmission rates achieved when the thickness of the waveguides 102 is constant and equal to 65 nm (and therefore such that *e₁₁₄ = e₁₁₆* = 65 nm) and without horizontal misalignment (i.e. without a misalignment parallel to their width) of the two optical coupling outer surfaces 118 relative to each other and when the width of the waveguides 102 (and also of the first and second ends 114, 116 of the interface element 112) is equal to 400 nm (curve 200), 1 µm (curve 202) and 5 µm (curve 204). The curves 206, 208 and 210 illustrate the fundamental mode transmission rates achieved when the thickness of the waveguides 102 is constant and equal to 65 nm and with a horizontal misalignment of the two optical coupling outer surfaces relative to each other that is equal to 500 nm, and when the width of the waveguides 102 is equal to 400 nm (curve 206), 1 µm (curve 208) and 5 µm (curve 210).

As can be seen from the various curves illustrated in Figure 3, when the distance d separating the optical coupling outer surfaces 118 is less than or equal to 0.3 µm, the width of the waveguides 102 allowing to achieve the best transmission is 5 µm, particularly in the presence of a horizontal misalignment, since this width provides a good tolerance to any misalignments of the optical coupling outer surfaces relative to each other.

In the described particular embodiment, at least a portion of the interface element 112 is arranged on a portion 128 of the support 104 disposed in overhang of an empty space 130. As can be seen in Figure 1, this portion 128 of the support 104 has a thickness less than that of the rest of the support 104 due to the empty space 130 formed under this portion 128. For example, in Figure 1, the thickness of the portion of the bulk layer 106 disposed in overhang of the empty space 130 is equal to 100 µm, the rest of the bulk layer 106 having a thickness equal to 775 µm. More generally, the portion 128 of the support 104 disposed in overhang of the empty space 130 may have a thickness *e₁₂₈* between 10 µm and 300 µm, and for example equal to 100 µm.

In the described particular embodiment, only one waveguide 102 of each chip 100 is described and illustrated. However, each chip 100 may comprise several waveguides 102, each comprising an interface element 112. The interface elements 112 of the waveguides 102 of a same chip 100 may be disposed next to each other such that the second ends 116 of these interface elements 112 form several optical coupling outer surfaces 118. In such a configuration, two of the waveguides 102 of each chip 100 can be used to optically align chips 100 with respect to each other before they are made integral with each other within a photonic device 1000, and the other waveguide(s) 102 of the chips 100 can be used to transmit useful signals. As an example, each chip 100 may comprise a total number of waveguides 102 ranging from 1 to several thousand, depending in particular on the dimensions of the chip 100.

Several photonic chips 100 can be produced collectively from a same substrate, or wafer. An example of a method for producing a single chip 100 is described below.

When producing the photonic chip 100, the waveguide 102 can be made by etching in one or more layers of material disposed on one or more other layers to form the support 104, for example in the surface layer of a substrate of the semiconductor-on-insulator type. In the described example, the encapsulation layer 110 is then deposited on the waveguide 102.

An etching step can then be performed from an upper face 132 of the portion(s) of material to form the waveguide 102 and through a portion of the thickness of the support 104, forming the optical coupling outer surface 118. In the presence of the encapsulation layer 110, this etching step is performed from an upper face 134 of the encapsulation layer 110 and through the encapsulation layer 110.

Another etching step can then be performed from a rear face 136 of the support 104 (the face opposite the upper face 122 on which the waveguide 102 is disposed) to cut out the chip 100 and, when the chip 100 is to comprise the portion 128 of the support 104 in overhang of the empty space 130, form this portion 128 of the support 104.

In the described example embodiment, the chips 100 are to be used for manufacturing a photonic device 1000 comprising at least two chips 100 aligned with each other such that their optical coupling outer surfaces 118 are disposed at least partially opposite each other. An example of a method for manufacturing such a device 1000 is described below.

Each of the chips 100 can then be made integral with one face of an intermediate substrate 138, or interposer. The thickness of the intermediate substrate 138 is, for example, between 125 µm and 3 mm. The intermediate substrate 138 comprises, for example, at least one of the following materials: silicon, glass, ceramic, metal.

The securing between the chip 100 and the intermediate substrate 138 can be performed by a fastening layer 140, for example by a gluing or soldering layer. The securing of the chip 100 onto the intermediate substrate 138 by soldering has the advantage, compared to other types of securing, of offering a better tolerance to the thermal and/or power stresses to which the chip 100 may be exposed.

In the described example embodiment, the chip 100, which is made integral with the intermediate substrate 138, is then optically aligned with another chip 100 that has also previously been made integral with another intermediate substrate 138. This optical alignment can be performed actively, for example by using one or more waveguides 102 dedicated to this alignment.

After this optical alignment of the chips 100, the assemblies comprising the chips 100 and the intermediate substrates 138 can then be made integral with each other, for example by at least one fastening element 142 disposed between the chips 100 and/or between the intermediate substrates 138. For example, the fastening element 142 may comprise an adhesive, in particular an adhesive that hardens when exposed to ultraviolet (UV) radiation.

Depending on the thickness of each of the chips 100, of each of the intermediate substrates 138 and on whether or not the portion 128 of the support 104 is present in overhang of the empty space 130, different configurations of the chips 100 and of the intermediate substrates 138 can be obtained.

Figure 4 schematically illustrates different examples of assemblies obtained at this stage of the method. The view a) illustrates the assembly obtained when the chips 100 assembled to each other have a same thickness and the intermediate substrates 138 also have a same thickness. The view b) illustrates the assembly obtained when the chips 100 assembled to each other have different thicknesses, only one of the two assembled chips 100 has a portion 128 of its support 104 disposed in overhang of an empty space 130 and the intermediate substrates 138 have a same thickness. The view c) illustrates the assembly obtained when the chips 100 assembled to each other have different thicknesses, only one of the two assembled chips 100 has a portion 128 of its support 104 disposed in overhang of an empty space 130 and the intermediate substrates 138 have different thicknesses that compensate for the difference in thicknesses of the chips 100. The view d) illustrates the assembly obtained when the chips 100 assembled to each other have different thicknesses and the intermediate substrates 138 have identical thicknesses. The view e) illustrates the assembly obtained when the chips 100 assembled to each other have different thicknesses, only one of the two assembled chips 100 has a portion 128 of its support 104 disposed in overhang of an empty space 130 and the intermediate substrates 138 have different thicknesses that compensate for the difference in thicknesses of the chips 100. The view f) illustrates the assembly obtained when the chips 100 assembled to each other have identical thicknesses, neither of the two assembled chips 100 has a portion of its support disposed in overhang of an empty space and the intermediate substrates 120 have identical thicknesses. Other configurations not illustrated in Figure 4 are possible.

The intermediate supports 138 can then be made integral with an assembly support 144. The thickness of the assembly support 144 is, for example, between 100 µm and a few mm. The assembly support 144 comprises, for example, at least one of the following materials: metal, ceramic, plastic, glass. In a particular configuration, the assembly support 144 may be configured to perform one or more functions, such as for example a temperature control, heating or cooling function.

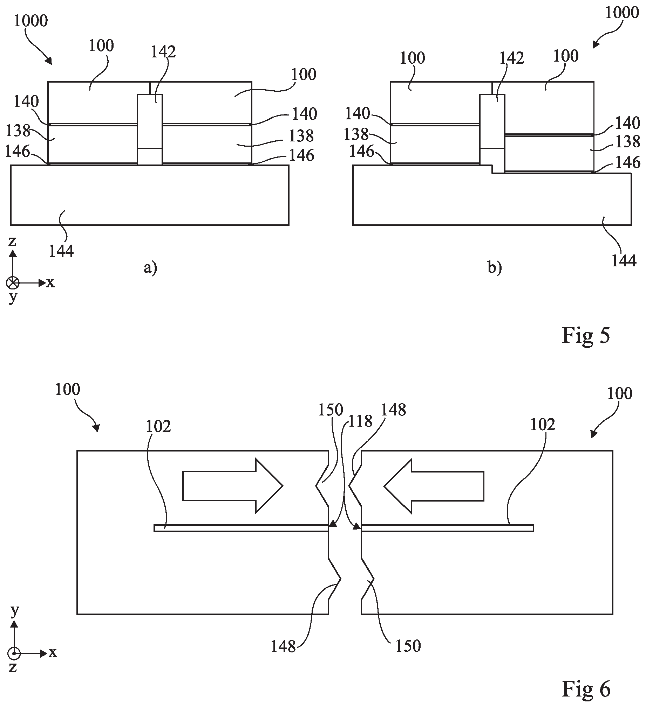

The securing between the intermediate substrates 138 and the assembly support 144 can be performed by another fastening layer 146, for example by a gluing or soldering layer. A soldering layer 146 has the advantage of offering a better tolerance to the thermal and/or power stresses to which the device 1000 may be exposed. Figure 5 illustrates examples of devices 1000 obtained after this securing. The configuration a) in Figure 5 illustrates the device 1000 obtained when the assemblies each comprising a chip 100 and an intermediate substrate 138 and made integral with each other and with the assembly support 144 have a same thickness.

In certain configurations such as the configurations b), d) and f) in Figure 4, the difference in thicknesses between the assemblies formed by the chips 100 and the intermediate substrates 138 can be compensated for when securing to the assembly support 144. Various types of compensation are possible. A first compensation option may consist of forming regions of different thicknesses in the assembly support 144 so as to compensate for the difference in thicknesses between the assemblies chip 100 + intermediate substrate 138. The configuration b) illustrated in Figure 5 schematically illustrates the device 1000 obtained in the case of such thickness compensation of the assemblies chip 100 + intermediate substrate 138. A second compensation option may consist of using a fastening layer 146 having locally different thicknesses in order to compensate for the difference in thicknesses between the assemblies chip 100 + intermediate substrate 138. This second option may be used, for example, to compensate for differences in thicknesses of up to 3 µm.

It is also possible that a difference in thicknesses between chips 100 be compensated for by the layers 140 that may have different thicknesses.

The difference in thicknesses to be compensated for when making the intermediate substrates 138 integral with the assembly support 144 may not be constant, for example when the chips 100 are not disposed completely parallel to each other. These differences in parallelism can be compensated for by the fastening layer 146.

According to one variant, the securing to each other of the chips 100 can be performed not on the side of the rear face 136 of the support 104 of each of the chips 100, but on the side of the upper faces 134 of the encapsulation layers 110 of the chips 100. According to such a variant, a securing element 152, for example identical or similar to an intermediate substrate 138, may be secured onto or made integral with the upper faces 134 of the chips 100. Such a variant corresponds to the configuration a) illustrated schematically in Figure 8.

According to another variant, the securing to each other of the chips 100 may be performed both on the side of the rear faces 136 of the supports 104 of the chips 100 by the assembly support 144 and the intermediate substrates 138, and on the side of the upper faces 134 of the chips 100 by the securing element 152. Such a variant corresponds to the configuration b) illustrated schematically in Figure 8.

According to one alternative embodiment, the side face 120 of the chip 100 may be provided with at least one alignment element 148 configured to be aligned with a complementary alignment element 150 disposed on another chip 100 that will be optically coupled to said chip 100. Figure 6 schematically illustrates such a configuration, in which each of the chips 100 has an alignment element 148 protruding from the side face 120, to be aligned with a complementary alignment element 150 corresponding to a recess whose shape and dimensions are complementary to those of the protruding element. Thus, in the described example, the alignment elements 148 of the chips 100 are such that they are to be fitted into the complementary alignment elements 150. The alignment elements 148 and the complementary alignment elements 150 can be used to facilitate the alignment of the chips with respect to each other in the direction parallel to the width of the waveguides 102 (parallel to the Y axis in the described example) and/or in the direction parallel to the thickness of the waveguides 102 (parallel to the Z axis in the described example).

In the above described various examples, the thickness compensation of the chips 100 performed during manufacturing the device 1000 makes it possible to use chips 100 made from different batches or substrates and/or made using different technologies.

In all the described embodiments and example embodiments, the reduction in thickness and the widening performed between the first end 114 and the second end 116 of the interface element 112 makes it possible to increase the size of the modes during the transfer of an optical signal between the two chips 100, and thus to reduce the alignment precision required between the chips 100. It should be noted that the mode widening can be adapted to find the optimum between the coupling efficiency and the positioning tolerance, and that it is not necessary to respect a standard mode size such as that imposed when using a fiber.

In all the described embodiments and example embodiments, the chip 100 has a high tolerance to any optical misalignments, allowing the chip 100 to be adapted to the equipment used, for example, for its assembly within a photonic device 1000.

In all the described embodiments and example embodiments, the optical coupling outer surfaces 118 are made with a high precision. They can be brought into close contact with each other, which makes it possible to reduce the distance *d* between the two waveguides 102 to less than 1 µm (for example, to less than 0.3 µm).

In all the described embodiments and example embodiments, the waveguide 102 can be obtained directly during producing the chip 100, without having to perform any further steps after producing the chip 100. The optical coupling achieved between two chips 100 does not require producing any optical coupling element after producing the chips 100.

In all the described embodiments and example embodiments, the optical coupling can be achieved simultaneously for several waveguides 102 formed on each of the chips 100.

In all the described embodiments and example embodiments, the dimensions of the waveguide 102, in particular their width, may be small, for example less than 15 µm, which allows them to be produced with a high density of waveguides at the coupling interface of the chip 100.

Furthermore, by using chips 100 derived from the same substrate, a high homogeneity in thicknesses can be achieved, which simplifies the vertical alignment of the chips 100 with each other.

The chip 100 and the device 1000 can be used for numerous applications in telecommunications, data communication, data center networks, integrated optics, optical interfaces, artificial intelligence, high-performance computing, sensing applications, etc.

In the above description, the chips 100 are described as each comprising one or more waveguides 102. However, each of the chips 100 may comprise one or more other optical and/or electronic and/or optoelectronic and/or photonic components. Similarly, the photonic device 1000 may comprise one or more optical and/or electronic and/or optoelectronic and/or photonic components other than the chips 100.

Various embodiments and variants have been described. Those skilled in the art will understand that certain features of these various embodiments and variants could be combined and other variants will readily occur to those skilled in the art.

Finally, the practical implementation of the described embodiments and variants is within the reach of those skilled in the art based on the above provided functional indications.

## Claims

1. A photonic device (1000) comprising at least two photonic chips (100), each comprising at least one waveguide (102) disposed on a support (104), the waveguide (102) comprising at least one interface element (112) extending between a first end (114) and a second end (116) forming an optical coupling outer surface (118) belonging to a same plane as a side face (120) of the photonic chip (100) or to a plane parallel to the side face (120), and wherein the second end (116) comprises:
- a thickness, perpendicular to an upper face (122) of the support (104) on which the waveguide (102) is disposed, which is less than a thickness of the first end (114), and/or
- a width, parallel to the optical coupling outer surface (118) and perpendicular to the thickness of the second end (116), which is greater than a width of the first end (114), and
said at least two photonic chips (100) being aligned with each other such that the optical coupling outer surfaces (118) of the photonic chips (100) are disposed at least partially opposite each other,
and further comprising intermediate substrates (138) such that the support (104) of each of the photonic chips (100) is integral with one of the intermediate substrates (138) and/or further comprising at least one securing element (152) with which the waveguides (102) of each of the photonic chips (100) are made integral,
and wherein the photonic chips (100) are made integral with each other by at least one fastening element (142), comprising for example an adhesive, disposed between the photonic chips (100) and/or between the intermediate substrates (138).

2. The photonic device (1000) according to claim 1, wherein, for at least one of the photonic chips (100), at least a portion of the interface element (112) is arranged on a portion (128) of the support (104) disposed in overhang of an empty space (130).

3. The photonic device (1000) according to claim 2, wherein, for at least one of the photonic chips (100), the portion (128) of the support (104) disposed in overhang of the empty space (130) has a thickness less than that of the rest of the support (104), for example between 10 µm and 300 µm.

4. The photonic device (1000) according to any one of the preceding claims, wherein, for at least one of the photonic chips (100), the support (104) comprises a bulk layer (106) and a buried dielectric layer (108) of a semiconductor-on-insulator type substrate, and wherein the waveguide (102) comprises portions of material derived from a surface layer of the substrate.

5. The photonic device (1000) according to any one of the preceding claims, wherein, for at least one of the photonic chips (100):
- the width of the first end (114) is between 350 nm and 500 nm and the width of the second end (116) is between 2 µm and 10 µm, and
- the thickness of the first end (114) is between 100 nm and 500 nm and the thickness of the second end (116) is between 40 nm and 100 nm.

6. The photonic device (1000) according to any one of the preceding claims, wherein, for at least one of the photonic chips (100), when the second end (116) and the side face (120) belong to different planes, a distance between these planes is less than or equal to 5 µm.

7. The photonic device (1000) according to any one of the preceding claims, wherein, for at least one of the photonic chips (100), the side face (120) is provided with at least one alignment element (148), for example a protruding element, configured to be aligned with at least one complementary alignment element (150), for example a recess, disposed on a side face (120) of the other photonic chip (100) to be optically coupled with said photonic chip (100) by the optical coupling outer surface (118).

8. The photonic device (1000) according to any one of the preceding claims, further comprising an assembly support (144) with which the intermediate substrates (138) are integral.

9. The photonic device (1000) according to claim 8, wherein the thicknesses of the photonic chips (100) differ from one another, and wherein this difference in thicknesses is compensated for by at least one of the following features:
- the intermediate substrates (138) have different thicknesses;
- the chips (100) are made integral with the intermediate substrates (138) by fastening layers (140) of different thicknesses;
- the assembly support (144) comprises regions of different thicknesses with which the intermediate substrates (138) are made integral;
- the intermediate substrates (138) are made integral with the assembly support (144) by other fastening layers (146) of different thicknesses.

10. A method for manufacturing a photonic device (1000), comprising at least:
- the production of at least two photonic chips (100), comprising, for the production of each of the photonic chips (100), at least a production of a waveguide (102) disposed on a support (104), the waveguide (102) comprising at least one interface element (112) extending between a first end (114) and a second end (116) forming an optical coupling outer surface (118) belonging to a same plane as a side face (120) of the photonic chip (100) or to a plane parallel to the side face (120), wherein the second end (116) comprises:
∘ a thickness, perpendicular to an upper face (122) of the support (104) on which the waveguide (102) is disposed, which is less than a thickness of the first end (114), and/or
o a width, parallel to the optical coupling outer surface (118) and perpendicular to the thickness of the second end (116), which is greater than a width of the first end (114);
- the alignment of the photonic chips (100) with each other such that the optical coupling outer surfaces (118) of the photonic chips (100) are disposed at least partially opposite each other,
- the securing of the photonic chips (100) to each other by intermediate substrates (138) such that the support (104) of each of the photonic chips (100) is integral with one of the intermediate substrates (138) and/or by at least one securing element (152) with which the waveguides (102) of each of the photonic chips (100) are made integral, and by at least one fastening element (142), comprising for example an adhesive, disposed between the photonic chips (100) and/or between the intermediate substrates (138).

11. The manufacturing method according to claim 10, wherein, for the production of at least one of the photonic chips (100), the production of the waveguide (102) comprises the implementation of an etching, from an upper face (132) of at least one portion of material to form the waveguide (102) and through a portion of the thickness of the support (104), forming the optical coupling outer surface (118).

12. The manufacturing method according to claim 11, further comprising, for the production of at least one of the photonic chips (100) and when a portion of the interface element (112) is arranged on a portion (128) of the support (104) disposed in overhang of an empty space (130), the implementation of an etching from a rear face (136) of the support (104) cutting out the chip (100) and forming the empty space (130).

13. The manufacturing method according to any one of claims 10 to 12, wherein the securing of electronic chips (100) to each other comprises a securing of the intermediate substrates (138) on an assembly support (144).
